# EUROPEAN PATENT APPLICATION

(11) **EP 4 043 823 A1**
(43) Date of publication of application: **17.08.2022**
(21) Application number: 19948249.8
(22) Date of filing: 10.10.2019
(51) Int. Cl.: F28F 1/16, B21D 53/08, F28D 1/053

(54) **HEAT EXCHANGER, HEAT EXCHANGER UNIT, REFRIGERATION CYCLE APPARATUS, AND HEAT EXCHANGE MEMBER MANUFACTURING METHOD**

(71) Applicant: MITSUBISHI ELECTRIC CORPORATION, Chiyoda-ku Tokyo 100-8310 (JP)
(72) Inventor: MAEDA, Tsuyoshi, Tokyo 100-8310 (JP); YATSUYANAGI, Akira, Tokyo 100-8310 (JP); ISHIBASHI, Akira, Tokyo 100-8310 (JP); YONEDA, Norihiro, Tokyo 100-8310 (JP)
(74) Representative: Pfenning, Meinig & Partner mbB
(86) International application number: PCT/JP2019/039964
(87) International publication number: WO 2021/070312

(57) **Abstract**

An object described in the present disclosure is to provide a heat exchanger, a heat exchange unit, and a refrigeration cycle apparatus, in which an insertion hole of a header and an end portion of a heat exchange member can be properly joined to each other, and also provide a method of manufacturing the heat exchange member. In the heat exchanger, the heat exchange unit, and the refrigeration cycle apparatus, and the method of manufacturing the heat exchange member, the heat exchange member and a header are provided. The heat exchange member extends in a first direction, and the header is connected to an end portion of the heat exchange member in the first direction. The heat exchange member includes at least one heat transfer tube extending in the first direction and a fin that is formed at part of an end edge of the at least one heat transfer tube in a second direction perpendicular to the first direction. The fin is provided at a fin setting portion that is at least part of a remaining portion of the heat exchange member that is other than the end portion thereof. Part of the at least one heat transfer tube that is located at the end portion of the heat exchange member has a smaller width in the second direction than a width of part of the at least one heat transfer tube in the second direction that is located at the fin setting portion.

## Description

### Technical Field

The present disclosure relates to a heat exchanger, a heat exchange unit including the heat exchanger, a refrigeration cycle apparatus, and a method for manufacturing a heat exchange member. In particular, the present disclosure relates to a structure of part of the heat exchange member that is to be inserted into a header.

### Background Art

In a well-known heat exchanger, heat exchange members includes fins and heat transfer tubes and the fins extend in the axial direction of the heat transfer tubes. An end portion of each of the heat exchange members is inserted into a header. The end portion of the heat exchange member is formed by cutting off the fin from the heat exchange member such that only the heat transfer tube remains in the heat exchange member (see, for example, Patent Literature 1).

### Citation List

### Patent Literature

Patent Literature 1: Japanese Unexamined Patent Application Publication No. 2018-155479

### Summary of Invention

### Technical Problem

However, in the heat exchange member in Patent Literature 1, in a process of cutting off the fin from the heat exchange member by press working, in some cases, the fin is not completely cut off from the heat exchange member. Whether the fin is completely cut off from the heat exchange member or not depends on the accuracy of a press die or the molding accuracy of the heat exchange member. In the case where the fin is not completely cut off from the heat exchange member, at the end portion of the heat exchange member, part of the fin that is closer to a bottom side thereof remains at the heat transfer tube. Thus, an insertion hole of the header into which the end portion of the heat exchange member is inserted needs to be formed in a complicated shape to fit to the shape of the end portion of the heat exchange member. Thus, in the header, the insertion hole cannot be easily formed. Alternatively, the insertion hole of the header into which the end portion of the heat exchange member is inserted needs to be formed to have a large size such that the end portion of the heat exchange member can be inserted into the insertion hole. Thus, the space between the header portion and the insertion hole of the header is made larger, and as a result, a joint strength obtained by soldering or an adhesive is reduced.

The present disclosure is applied to solve the above problem, and relates to a heat exchanger in which an insertion hole of a header and an end portion of a heat exchange member can be properly joined to each other, a heat exchange unit, a refrigeration cycle apparatus, and a method for manufacturing a heat exchange member.

### Solution to Problem

A heat exchanger according to an embodiment of the present disclosure includes: a heat exchange member extending in a first direction; and a header connected to an end portion of the heat exchange member that is located at an end of the heat exchange member in the first direction. The heat exchange member includes at least one heat transfer tube extending in the first direction, and a fin formed at part of an end edge of the at least one heat transfer tube, the end edge of the at least one heat transfer tube being located at an end of the at least one heat transfer tube in a second direction perpendicular to the first direction. The fin is provided at a fin setting portion that is at least part of a remaining portion of the heat exchange member that is other than the end portion of the heat exchange member, and part of the at least one heat transfer tube that is located at the end portion of the heat exchange member has a smaller width in the second direction than a width of part of the at least one heat transfer tube in the second direction that is located at the fin setting portion.

A heat exchange unit according to another embodiment of the present disclosure includes the above heat exchanger.

A refrigeration cycle apparatus according to still another embodiment of the present disclosure includes the heat exchange unit.

A method of manufacturing a heat exchange member, includes: forming a roughly formed material that forms a heat exchange member including at least one heat transfer tube and a fin, the at least one heat transfer tube including a refrigerant passage that extends in a first direction in the at least one heat transfer tube, the fin extending from an end edge of the at least one heat transfer tube, the end edge of the at least one heat transfer tube being formed to extend in the first direction; and cutting out, by press working, parts of the fin that are located at end portions of the heat exchange member, the end portions of the heat exchange member being located on respective sides of the heat exchange member in the first direction. A section of the roughly formed material that is taken along a direction perpendicular to the first direction is unchanged at any position in the first direction.

### Advantageous Effects of Invention

According to the embodiments of the present disclosure, the end portion of the heat exchange member is inserted into an insertion hole of the header, with an appropriate space interposed between the end portion and the insertion hole, and the end portion and the insertion hole are thus properly joined to each other. As a result, the joint strength between the heat exchange member and the header is improved, and occurrence of a joint failure therebetween is reduced, thus improving the reliability of the heat exchanger.

### Brief Description of Drawings

[Fig. 1] Fig. 1 is a refrigerant circuit diagram illustrating the configuration of a refrigeration cycle apparatus 50 including a heat exchanger 100 according to Embodiment 1.
[Fig. 2] Fig. 2 is a three-view diagram illustrating the configuration of related part of the heat exchanger 100 according to Embodiment 1.
[Fig. 3] Fig. 3 is a three-view diagram of a heat exchange member 10 according to Embodiment 1.
[Fig. 4] Fig. 4 is an enlarged view of Fig. 3, (c).
[Fig. 5] Fig. 5 is a sectional view of the heat exchange member 10 as illustrated in Fig. 3.
[Fig. 6] Fig. 6 is a sectional view of the heat exchange member 10 as illustrated in Fig. 3.
[Fig. 7] Fig. 7 is a three-view diagram of a first header 30 of the heat exchanger 100 according to Embodiment 1.
[Fig. 8] Fig. 8 is an explanatory view for a state in which an end portion 13a of the heat exchange member 10 of the heat exchanger 100 according to Embodiment 1 is inserted into an insertion hole 31a.
[Fig. 9] Fig. 9 is an enlarged view of the top or the bottom of a heat exchange member 210 according to Embodiment 2.
[Fig. 10] Fig. 10 is a sectional view of the heat exchange member 210 illustrated in Fig. 9.
[Fig. 11] Fig. 11 is a sectional view of the heat exchange member 210 illustrated in Fig. 9.
[Fig. 12] Fig. 12 is a side view of a heat exchange member 310 according to Embodiment 3.
[Fig. 13] Fig. 13 is an enlarged view of the top or the bottom of the heat exchange member 310 according to Embodiment 3.
[Fig. 14] Fig. 14 is an enlarged view of the top or the bottom of a modification of the heat exchange member 310 according to Embodiment 3.

### Description of Embodiments

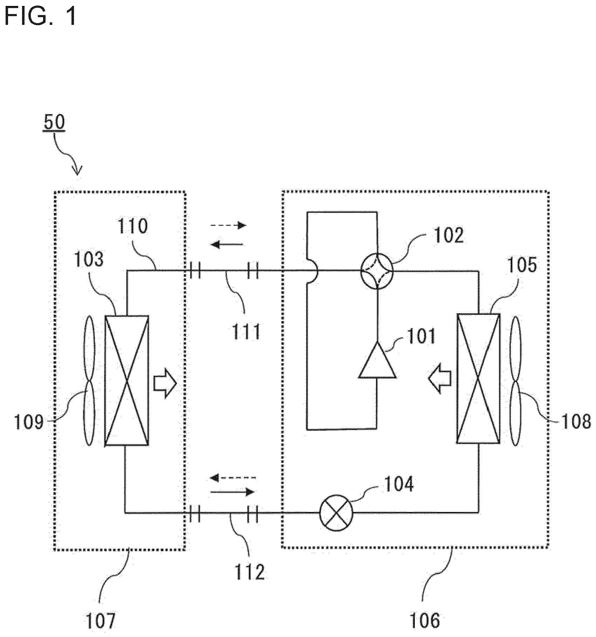

A heat exchanger, a heat exchange unit, a refrigeration cycle apparatus, and a method for manufacturing a heat exchange member, according to Embodiment 1, will be described with reference to the drawings, for example. It should be noted that in figures including Fig. 1 that will be referred to below, relationships in size and shape between components in the figures may differ from actual ones. In each of the figures, components that are the same as or equivalent to those in a previous figure or previous figures are denoted by the same reference signs, and the same is true of the entire text of the specification. Furthermore, in order that descriptions be easily understood, terms related to directions (for example, "up", "down", "right", "left", "forward", and "backward") are used as appropriate. However, these terms are merely used for convenience of explanation, and do not limit the positions and orientations of devices, apparatuses or components. In the specification, basically, the positional relationships between the components, the directions in which the components extend, and the directions in which components are arranged are those in the case where a heat exchanger is set in a usable state.

### Embodiment 1

### (Refrigeration Cycle Apparatus 50)

Fig. 1 is a refrigerant circuit diagram illustrating the configuration of a refrigeration cycle apparatus 50 including a heat exchanger 100 according to Embodiment 1. In Fig. 1, dashed arrows indicate the flow direction of refrigerant in a refrigerant circuit 110 in a cooling operation, and solid arrows indicate the flow direction of refrigerant in the refrigerant circuit 110 in a heating operation. First of all, the refrigeration cycle apparatus 50 including the heat exchanger 100 will be described with reference to Fig. 1. Regarding the embodiments, an air-conditioning apparatus will be described as an example of the refrigeration cycle apparatus 50. For example, the refrigeration cycle apparatus 50 is used for refrigeration or air conditioning in a refrigerator, a freezer, a vending machine, an air-conditioning apparatus, a refrigeration apparatus, a hot-water supply apparatus, or other apparatuses. It should be noted that the refrigerant circuit 110 as illustrated in the figure is an example. For example, the components of the circuit are not limited to those described regarding the embodiments and can be modified as appropriate within the technical scope according to the embodiments.

The refrigeration cycle apparatus 50 includes the refrigerant circuit 110. In the refrigerant circuit 10, a compressor 101, a flow switching device 102, an indoor heat exchanger 103, a pressure reducing device 104, and an outdoor heat exchanger 105 are sequentially connected by refrigerant pipes. The heat exchanger 100 is used as at least one of the outdoor heat exchanger 105 and the indoor heat exchanger 103, and will be described later. The refrigeration cycle apparatus 50 includes an outdoor unit 106 and an indoor unit 107. A device incorporating a heat exchanger therein, such as the outdoor unit 106 or the indoor unit 107, may be referred to as a heat exchange unit. The outdoor unit 106 houses the compressor 101, the flow switching device 102, the outdoor heat exchanger 105, the pressure reducing device 104, and an outdoor fan 108 that supplies outdoor air to the outdoor heat exchanger 105. The indoor unit 107 houses the indoor heat exchanger 103 and an indoor fan 109 that supplies air to the indoor heat exchanger 103. The outdoor unit 106 and the indoor unit 107 are connected by two extension pipes 111 and 112 each of which is one of the refrigerant pipes.

The compressor 101 is a fluid machine that compresses and discharges sucked refrigerant. The flow switching device 102 is, for example, a four-way valve and is a device that switches a refrigerant passage to be used, between a refrigerant passage in the cooling operation and that in the heating operation under control by a controller (not illustrated).

The indoor heat exchanger 103 is a heat exchanger that causes heat exchange to be performed between refrigerant that flows in the indoor heat exchanger 103 and indoor air supplied by the indoor fan 109. The indoor heat exchanger 103 operates as a condenser in the heating operation and operates as an evaporator in the cooling operation.

The pressure reducing device 104 is, for example, an expansion valve and is a device that decompresses refrigerant. As the pressure reducing device 104, an electronic expansion valve whose opening degree is adjusted under control by a controller can be used.

The outdoor heat exchanger 105 is a heat exchanger that causes heat exchange to be performed between refrigerant that flows in the outdoor heat exchanger 105 and air supplied by the outdoor fan 108. The outdoor heat exchanger 105 operates as an evaporator in the heating operation and operates as a condenser in the cooling operation.

### (Operation of Refrigeration Cycle Apparatus 50)

Next, an example of the operation of the refrigeration cycle apparatus 50 will be described with reference to Fig. 1. In the heating operation of the refrigeration cycle apparatus 50, high-pressure and high-temperature gas refrigerant discharged from the compressor 101 flows into the indoor heat exchanger 103 via the flow switching device 102 and exchanges heat with air supplied by the indoor fan 109 to condense and change into high-pressure liquid refrigerant. The high-pressure liquid refrigerant flows out of the indoor heat exchanger 103 and is then changed into low-pressure two-phase gas-liquid refrigerant by the pressure reducing device 104. The low-pressure two-phase gas-liquid refrigerant flows into the outdoor heat exchanger 105 and exchanges heat with air supplied by the outdoor fan 108 to evaporate and change into low-pressure gas refrigerant. The low-pressure gas refrigerant is sucked into the compressor 101.

In the cooling operation of the refrigeration cycle apparatus 50, refrigerant that flows in the refrigerant circuit 110 flows in the opposite direction to the flow direction of refrigerant in the refrigerant circuit 110 in the heating operation. That is, in the cooling operation of the refrigeration cycle apparatus 50, high-pressure and high-temperature gas refrigerant discharged from the compressor 101 flows into the outdoor heat exchanger 105 via the flow switching device 102 and exchanges heat with air supplied by the outdoor fan 108 to condense and change into high-pressure liquid refrigerant. The high-pressure liquid refrigerant flows out of the outdoor heat exchanger 105 and is changed into low-pressure two-phase gas-liquid refrigerant by the pressure reducing device 104. The low-pressure two-phase gas-liquid refrigerant flows into the indoor heat exchanger 103 and exchanges heat with air supplied by the indoor fan 109 to evaporate and change into low-pressure gas refrigerant. The low-pressure gas refrigerant is sucked into the compressor 101.

### (Heat Exchanger 100)

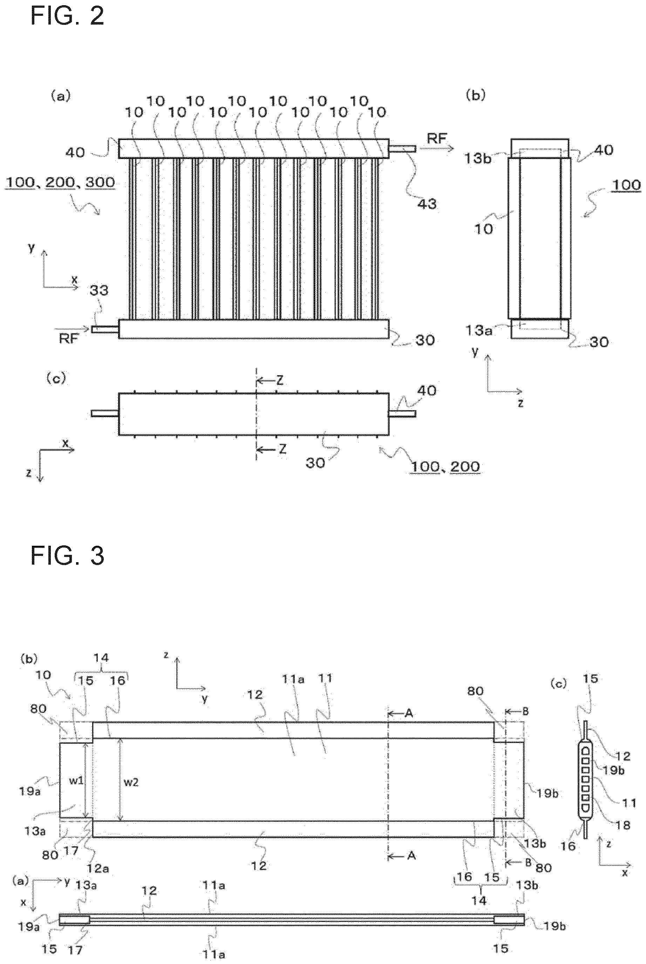

Fig. 2 is a three-view diagram illustrating the configuration of related part of the heat exchanger 100 according to Embodiment 1. Fig. 2, (a), is a front view of the heat exchanger 100. Fig. 2, (b), is a side view of the heat exchanger 100. Fig. 2, (c), is a bottom view of the heat exchanger 100. In Fig. 2, arrows RF indicate respective flows of refrigerant that flows into the heat exchanger 100 and that flows out of the heat exchanger 100. The heat exchanger 100 according to Embodiment 1 will be described with reference to Fig. 2.

The heat exchanger 100 according to Embodiment 1 includes a plurality of heat exchange members 10, and a first header 30 and a second header 40, which are connected to end portions of the heat exchange members 10. The heat exchange members 10 are arranged in the x direction. In addition, the heat exchange members 10 are disposed such that the tube axes thereof extend in the y direction. In Embodiment 1, the y direction is parallel to the direction of gravity. However, the above description concerning the configuration of the heat exchanger 100 is not limiting, and the heat exchanger 100 may be provided such that the y direction is inclined relative to the direction of gravity. The spaces between the heat exchange members 10 are equal to each other. The heat exchange members 10 are arranged at regular intervals in the x direction. It should be noted that the tube axial direction of each of the heat exchange members 10 may be referred to as a first direction; the width direction of each of the heat exchange members 10 may be referred to as a second direction; and the direction in which the heat exchange members 10 are arranged may be referred to as a third direction.

An end portion 13a of each of the heat exchange members 10 that is one end portion of each heat exchange member 10 in the tube axial direction is connected to the first header 30. An end portion 13b of each heat exchange member 10 that is the other end portion of the heat exchange member 10 in the tube axial direction is connected to the second header 40. The first header 30 and the second header 40 are disposed such that their longitudinal directions are parallel to the direction in which the heat exchange members 10 are arranged. The longitudinal directions of the first header 30 and the second header 40 are parallel to each other. In the following description, the first header 30 and the second header 40 may be collectively referred to as headers 2.

The end portions 13a and 13b of the heat exchange member 10 are inserted into the respective headers 2 and joined thereto by a joining method or a joining member such as soldering or an adhesive. In the heat exchange member 10, a heat transfer tube 11 corresponding to part of the heat exchange member 10 that is other than the end portions 13a and 13b thereof is located between a lower surface of the first header 30 and an upper surface of the second header 40.

The heat exchanger 100 is a so-called finless heat exchanger. That is, in the heat exchanger 100, corrugated fins that connect sides of the heat exchange members 10 are not provided between the heat exchange members 10. That is, the heat exchange members 10 are connected by the headers 2 only. The spaces between the sides of the heat exchange members 10 are set to be narrow to improve a heat exchange efficiency.

### (Heat Exchange Member 10)

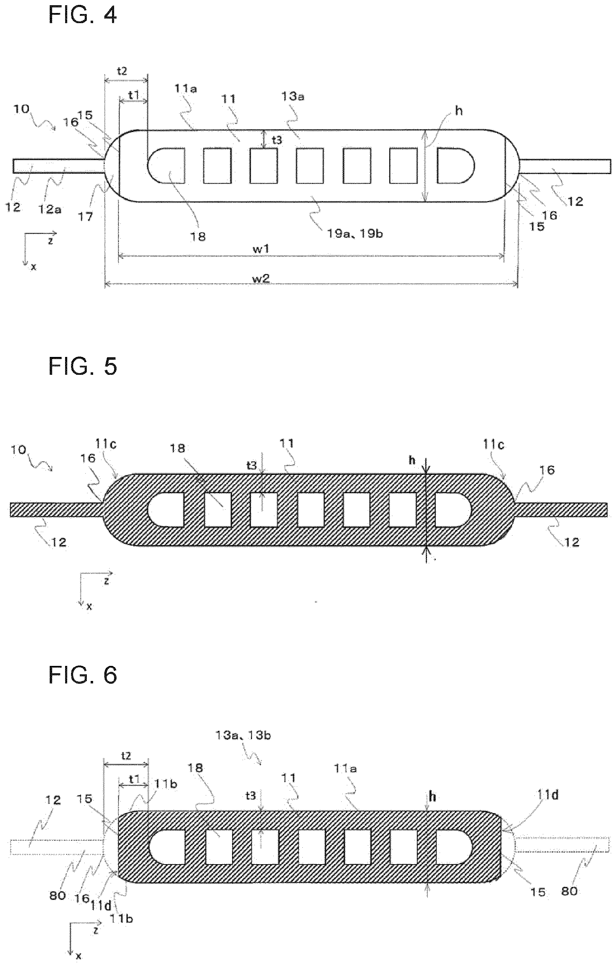

Fig. 3 is a three-view diagram of the heat exchange member 10 according to Embodiment 1. Fig. 3, (a), is a front view of the heat exchange member 10. Fig. 3, (b), is a side view of the heat exchange member 10. Fig. 3, (c), is a top view of the heat exchange member 10. Fig. 4 is an enlarged view of Fig. 3, (c). Figs. 5 and 6 are sectional views of the heat exchange member 10 as illustrated in Fig. 3. Fig. 5 illustrates a section taken along line A-A in Fig. 3. Fig. 6 illustrates a section taken along line B-B in Fig. 3. In Embodiment 1, in each of the heat exchange members 10, a fin 12 is provided in such a manner as to extend in the z direction from part of an end edge 14 of the heat transfer tube 11, which is a flat tube. The heat transfer tube 11 has refrigerant passages 18 that allow refrigerant to flow therein. Each of the heat exchange members 10 extends between the first header 30 and the second header 40. The heat exchange members 10 are disposed such that sides 11a thereof face each other. Between any adjacent two of the heat exchange members 10, a space is provided as an air passage

In the heat exchanger 100, the direction in which the heat exchange members 10 are arranged is a horizontal direction. However, the direction in which the heat exchange members 10 are arranged is not limited to the horizontal direction and may be a vertical direction or a direction inclined relative to the vertical direction. Similarly, in the heat exchanger 100, the tube axial direction of each of the heat exchange members 10 is the vertical direction. However, the direction in which the heat exchange members 10 extend is not limited to the vertical direction and may be the horizontal direction or a direction inclined relative to the vertical direction.

When the heat exchanger 100 operates as an evaporator of the refrigeration cycle apparatus 50, refrigerant flows in each of the heat exchange members 10 from one end face 19a of each heat exchange member 10 in the y direction toward the other end face 19b thereof in the y direction. In addition, when the heat exchanger 100 operates as a condenser of the refrigeration cycle apparatus 50, refrigerant flows in the heat exchange member 10 from the other end face 19b in the y direction toward the one end face 19a in the y direction.

As illustrated in Fig. 4, the heat exchange member 10 includes the heat transfer tube 11 and fins 12. The heat transfer tube 11 of the heat exchange member 10 has a sectional shape that is elongated in a single direction, such as an elliptical shape. In the heat exchange member 10, the fins 12 extend from part of respective end edges 14 of the heat transfer tube 11, the end edges 14 being each located at an end of the heat transfer tube 11 in a direction along the major axis thereof. As illustrated in Fig. 3, (b), the fins 12 are provided at respective fin setting portions 16 that are located between the end portions 13a and 13b, which are located at respective sides of the heat exchange member 10 in the y direction. The fin setting portions 16 are portions of the respective end edges 14 of the heat transfer tube 11.

At the end portions 13a and 13b of the heat exchange member 10, no fins 12 are provided at the end edges 14. End-portion end faces 15 that are end faces of the end portions 13a and 13b of the heat exchange member 10 in the z direction are located closer than the fin setting portions 16 to a center side of the heat exchange member 10. The end-portion end face 15 is part of the end edge 14.

A width w1 of part of the heat exchange member 10 in the z direction that is located at each of the end portions 13a and 13b is smaller than a width w2 of part of the heat exchange member 10 in the z direction that is located at each of the fin setting portions 16. As illustrated in Fig. 5, the end portions 13a and 13b are each shaped by cutting off both end portions of the heat transfer tube 11 having an elliptical sectional shape, in the z direction. In Embodiment 1, the end-portion end face 15 is a flat surface perpendicular to the z direction. However, the end-portion end face 15 is not limited to the flat surface, and may be, for example, a surface that is inclined such that the width w1 decreases in a direction toward the end face 19a or 19b of the heat exchange member 10.

The heat transfer tube 11 has the refrigerant passages 18 in which refrigerant flows. The thickness of part of the heat transfer tube 11 that is located between each of the refrigerant passages 18 and a surface of the heat transfer tube 11 is set such that the above part ensures a sufficient pressure resistance. In the two end portions 13a and 13b of the heat exchange member 10, which are located at respective ends of the heat exchange member 10 in the y direction, the thickness of part of the heat transfer tube 11 that is located from an end of an outermost one of the refrigerant passages 18 in the z direction to the end-portion end face 15 is t1. This thickness will be referred to as a first thickness t1. In part of the heat exchange member 10 where fins 12 are provided, the thickness of part of the heat transfer tube 11 that is located from the end of the outermost one of the refrigerant passages 18 in the z direction to the fin setting portion 16 is t2. This thickness will be referred to as a second thickness t2. The thickness from an end of each of the refrigerant passages in the x direction to a side 11a is t3. This thickness will be referred to as a third thickness t3.

In Embodiment 1, the first thickness t1 is smaller than the second thickness t2. This relationship is established at both ends of the heat exchange member 10 in the z direction. In addition, the second thickness t2 is greater than the third thickness t3. Furthermore, the first thickness t1 is greater than or equal to at least the third thickness t3.

Furthermore, regarding the third thickness t3, which is the thickness of the above part of the heat transfer tube 11 of the heat exchange member 10 in the x direction, the part where the fins 12 as illustrated in Fig. 5 are provided and the end portions 13a and 13b as illustrated in Fig. 6 are formed such that the third thickness t3 in the part where the fins 12 are provided is equal to the third thickness t3 in the end portions 13a and 13b. That is, the side 11a of the heat transfer tube 11 is a flat surface that is continuous from the part where the fins 12 are provided to the end portions 13a and 13b and has no steps. In other words, a width h of part of the heat transfer tube 11 in the x direction that is located in the part where the fins 12 are provided as illustrated in Fig. 5 is equal to a width h of part of the heat transfer tube 11 in the x direction that is located at each of the end portions 13a and 13b as illustrated in Fig. 6. That is, the heat exchange member 10 is formed such that the width h in the x direction is constant at any position in the y direction.

### (Method of Manufacturing Heat exchange member 10)

The heat exchange member 10 is made of a metal material such as aluminum. The heat exchange member 10 is formed by cutting part of material formed by extrusion molding or pultrusion molding such that the material has a length determined in advance. A method of manufacturing the heat exchange member 10 includes a forming step of forming a roughly formed material having a sectional shape as illustrated in Fig. 5 by, for example, extrusion molding, and a cutting step of cutting out part of the roughly formed material made by extrusion molding such that the roughly formed material has a required length. In addition, the manufacturing method of the heat exchange member 10 includes a cutting step of cutting out corner portions of both end portions of the cut roughly formed material having the length determined in advance, the end portions being located at respective ends of the cut roughly formed material in the longitudinal direction.

The manufacturing method of the heat exchange member 10 includes a forming step of integrally forming the fins 12 and the heat transfer tube 11, and thus does not need to include a step of joining the fins 12 and the heat transfer tube 11 to each other. It is therefore possible to reduce the time required to manufacture the heat exchange member 10 and to improve the accuracy of the heat exchange member 10. In addition, in the heat exchange member 10, since the fins 12 and the heat transfer tube 11 are integrally formed, it is possible to reduce the size of the heat exchange member 10, while ensuring a sufficient heat transfer performance between the heat transfer tube 11 and the fins 12.

As illustrated in Fig. 3, (b), in the cutting step, at least each of corner portions 80 of a roughly formed material having a rectangular shape is cut out, the corner portions 80 which are to be cut out each having a rectangular shape as viewed in a direction perpendicular to the side 11a of the heat exchange member 10. The corner portion 80 includes part of the fin 12 and part of an end of the heat transfer tube 11 in the z direction. The corner portions 80 are cut out by, for example, press working. The accuracy of the width w1 of the end portions 13a and 13b is improved by cutting out the corner portions 80 with the same press die such that the end-portion end faces 15 are formed.

It should be noted that in the cutting step, the end face 19a or 19b may be formed at the same time as the corner portions 80 are cut out. In addition, in the cutting step, distal ends of the fins 12 may be formed at the same time as the corner portions 80 are cut out. That is, other peripheral portions of the heat exchange member 10 as illustrated in Fig. 3, (b), may be shaped at the same time as the corner portions 80 are cut out from the roughly formed material.

### (Sectional Shape of End Portions 13a and 13b)

As illustrated in Fig. 6, at each of the end portions 13a and 13b, the end-portion end faces 15 are formed by cutting off the corner portions 80. In a state in which the heat transfer tube 11 of the heat exchange member 10 is a roughly molded material, the second thickness t2, which is a thickness in the z direction, is set greater than the third thickness t3, which is a thickness in the x direction. In the cutting step of the method of manufacturing the heat exchange member 10, at least part of the heat exchange member 10 that is located from the fin setting portion 16 to the fin 12 or part of the heat exchange member 10 that is located from a location closer to the center of the heat transfer tube 11 than the fin setting portion 16 to the fin 12 is cut out. In such a manner, by cutting out the corner portions 80, at the end portions 13a and 13b of the heat exchange member 10, the end-portion end faces 15, which are flat surfaces of the end edges 14 in the z direction, are formed. When a section of the heat transfer tube 11 that is perpendicular to the y direction is elliptical, an external shape of surrounding part of each of the end edges 14 of the end portions 13a and 13b of the heat exchange member 10 is a shape formed by combining curved lines 11b extending toward the outside of the heat transfer tube 11 and a straight line in the x direction.

In the heat transfer tube 11 of the heat exchange member 10, the first thickness t1 is set greater than the third thickness t3 even when part of the heat exchange member 10 that is located from the fin setting portion 16 to the fin 12 or part of the heat exchange member 10 that is located from a location closer to the center of the heat transfer tube 11 than the fin setting portion 16 to the fin 12 is cut off. That is, the heat transfer tube 11 of the heat exchange member 10 has a margin for the thickness of the end edges 14 in the z direction in order to reliably cut off part of the fins 12 in the state in which the heat transfer tube 11 of the heat exchange member 10 is the roughly formed material. Thus, it is possible to process the heat exchange member 10 to accurately shape the end portions 13a and 13b of the heat exchange member 10 and to ensure a sufficient pressure resistance.

### (Headers 2)

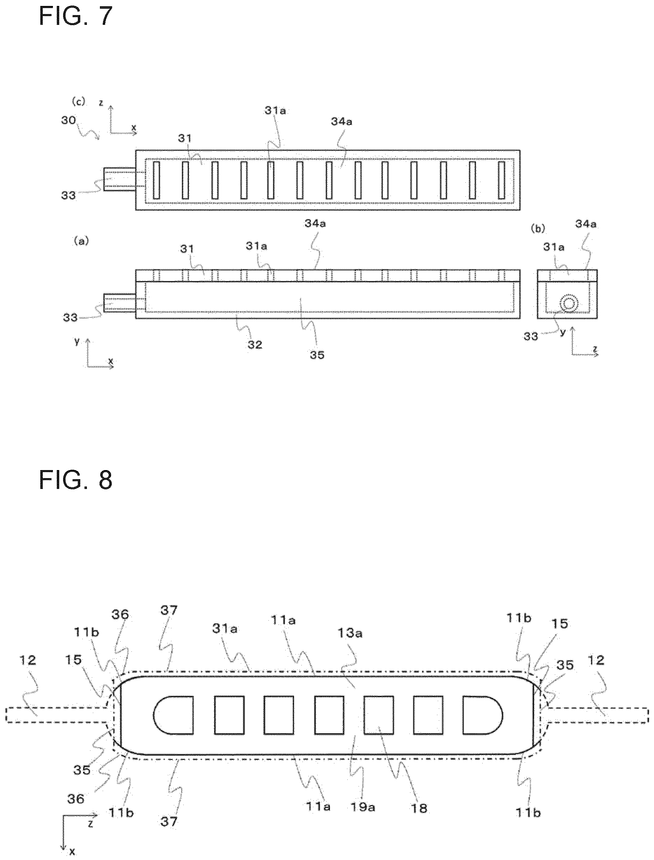

Fig. 7 is a three-view diagram of the first header 30 of the heat exchanger 100 according to Embodiment 1. Fig. 7, (a), is a front view of the first header 30. Fig. 7, (b), is a side view of the first header 30. Fig. 7, (c), is a top view of the first header 30. Each of the first header 30 and the second header 40 extends in the x direction and is formed in such a manner as to allow refrigerant to flow therein. As illustrated in Fig. 2, for example, refrigerant flows into one end of the first header 30 in the direction indicated by the arrow RF for the first header 30 and is distributed to the heat exchange members 10. The distributed refrigerants that have passed through the respective heat exchange members 10 join each other in the second header 40, and then flow out from one end of the second header 40.

In Figs. 2 and 7, the external shape of each of the headers 2 is a cuboid shape but is not limited to the cuboid shape. The external shape of each of the headers 2 may be, for example, a cylindrical shape or an elliptical cylindrical shape, and the sectional shape of the header 2 can be changed as appropriate. In addition, for example, a cylindrical body whose both ends are closed or a multilayer body in which plates having slits are stacked together can be used as the body of the header 2. The first header 30 and the second header 40 have refrigerant ports 33 and 43, respectively, which allow refrigerant to flow thereinto and therefrom.

As illustrated in Fig. 7, the first header 30 includes a first shell member 31 that forms a header upper surface 34a and a second shell member 32 that forms a bottom portion, and is formed in the shape of a cuboid that is a combination of the shapes of the first shell member 31 and the second shell member 32. The refrigerant port 33 is provided at an end portion of the second shell member 32 that is located at an end of the second shell member 32 in the opposite direction to the x direction. In the header upper surface 34a of the first header 30, a plurality of insertion holes 31a are formed. The insertion holes 31a are arranged in the x direction in association with the respective heat exchange members 10. The insertion holes 31a are holes into which end portions 13a of the respective heat exchange members 10 are inserted. The insertion holes 31a extend through the first shell member 31 along the short sides thereof. The second header 40 has the same configuration as that of the first header 30.

### (Insertion Hole 31a)

Fig. 8 is an explanatory view for a state in which the end portion 13a of the heat exchange member 10 of the heat exchanger 100 according to Embodiment 1 is inserted in the insertion hole 31a. The insertion hole 31a has a form shaped along the external shape of the end portion 13a of the heat exchange member 10 and is fit to the end portion 13a, with a given space interposed between the insertion hole 13a and the end portion 13a. The insertion hole 31a has straight portions 35 that are located at respective ends of the insertion hole 31a in the z direction, and curved portions 36 that extend from respective ends of each of the straight portions 35. The curved portions 36 are shaped along the curved lines 11b, which form the external shape of the end portion 13a of the heat exchange member 10. Since the insertion holes 31a are shaped along the external shape of the end portion 13a of the heat exchange member 10, it is possible to properly insert the end portion 13a of the heat exchange member 10 into the insertion hole 31a and to ensure a joint strength of the heat exchange member 10 that is obtained by, for example, soldering.

In Embodiment 1, in remaining part of the heat exchange member 10 that is other than the two end portions 13a and 13b, the external shape of each of end edge portions 11c that are end portions of the heat transfer tube 11 in the z direction and that include the end edge 14 is an arc shape in a section perpendicular to the second direction. In addition, in the two end portions 13a and 13b of the heat exchange member 10, the external shape of each of edge regions 11d that are end portions of the heat transfer tube 11 in the z direction and that include the end edges 14 is a shape that is obtained by combining a straight line and curved lines extending toward the outside of the heat transfer tube 11 in the section perpendicular to the second direction. Because of such a configuration, the shape of each of the insertion holes 31a is simplified and the insertion holes 31a are thus easily formed. In addition, in part of the heat exchange member 10 where the fins 12 are provided, each end of the heat transfer tube 11 in the z direction has an arc shape, thereby reducing separation of air that flows into the heat exchanger 100 at each end of the heat transfer tube 11 in the z direction, and thus improving the heat exchange performance of the heat exchanger 100.

In Embodiment 1, the heat transfer tube 11 of the heat exchange member 10 is a flat tube. Thus, the insertion holes 31a of each of the headers 2 are larger than those of a heat exchanger that includes circular heat transfer tubes 11. Therefore, the number of the insertion holes 31a is smaller. As a result, the header 2 is more easily made.

In addition, the heat exchange member 10 can be positioned for the headers 2 by the end portions 13a and 13b in which the fins 12 are not provided. To be more specific, in the z direction, the heat exchange member 10 can be positioned for the insertion hole 31a by the end-portion end faces 15, and in the x direction, the heat exchange member 10 can be positioned by the sides 11a of the end portions 13a and 13b. Furthermore, in the y direction, the heat exchange member 10 can be positioned for the headers 2 by contact surfaces 17 that are formed when the corner portions 80 are cut out from the roughly formed material. Since the heat exchange member 10 can be positioned for the headers 2 by the end portions 13a and 13b, which have high strength, the heat exchange member 10 can be stably positioned. In this case, a step may be formed between each of the contact surfaces 17 and an associated one of fin end faces 12a that are located at ends of the fin 12 in the y direction. That is, the fin setting portions 16 do not need to be provided throughout remaining part of the heat exchange member 10 that is other than the end portions 13a and 13b. That is, it suffices that the fin setting portions 16 are provided in at least part of the remaining part of the heat exchange member 10 that is other than the end portions 13a and 13b. Since the fin end faces 12a are located farther apart from the header upper surface 34a than the contact surfaces 17 in the y direction, it is possible to position the heat exchange member 10 without bringing the fin 12 into contact with the headers 2. The fin 12 is thinner than the heat transfer tube 11. Thus, when the heat exchange member 10 is positioned, the contact surfaces 17 of the heat transfer tube 11 are brought into contact with the headers 2, whereby it is possible to reduce deformation of the fin 12.

It should be noted that in the cutting step, in the case where part of the fin 12 that is to be cut off cannot be completely cut off in the cutting step and partly remain at ends of the end portions 13a and 13b in the z direction, the remaining part of the fin 12, which has a small thickness, is inserted into the insertion hole 31a, thereby achieving the positioning. Thus, since the positioning of the heat exchange member 10 in the x, y, and z directions is performed by the fin 12, the fin 12 may be deformed, for example. However, in Embodiment 1, since part of the fin 12 that is to be cut off do not remain at the end portions 13a and 13b after the cutting step, the heat exchange member 10 can be positioned by the heat transfer tube 11 only. It is therefore possible to stably perform the positioning, while reducing the deformation.

### (Modification of Heat Exchange Member 10)

As described above, a sectional shape of the heat transfer tube 11 of the heat exchange member 10 is elliptical, but is not limited to this shape. For example, the heat transfer tube 11 may have a rectangular sectional shape. Also in such a case, the heat exchange member 10 is formed by cutting out the corner portions 80 from the roughly formed material, and the corner portion 80 includes part of the fin 12 and part of an end of the heat transfer tube 11 in the z direction. In Embodiment 1, the heat exchanger 100 includes thirteen heat exchange members 10; however, the number of the heat exchange members 10 is not limited, and it suffices that the heat exchanger 100 include at least one heat exchange member 10. In the heat exchanger 100, heat exchange members 10 arranged as described above may also be arranged in a plurality of rows in the z direction.

### Embodiment 2

A heat exchanger 200 according to Embodiment 2 will be described. The heat exchanger 200 is different from the heat exchanger 100 according to Embodiment 1 in the shape of the heat exchange member. Regarding Embodiment 2, components that are the same in function and operation as those in Embodiment 1 will be denoted by the same reference signs, and their descriptions will thus be omitted.

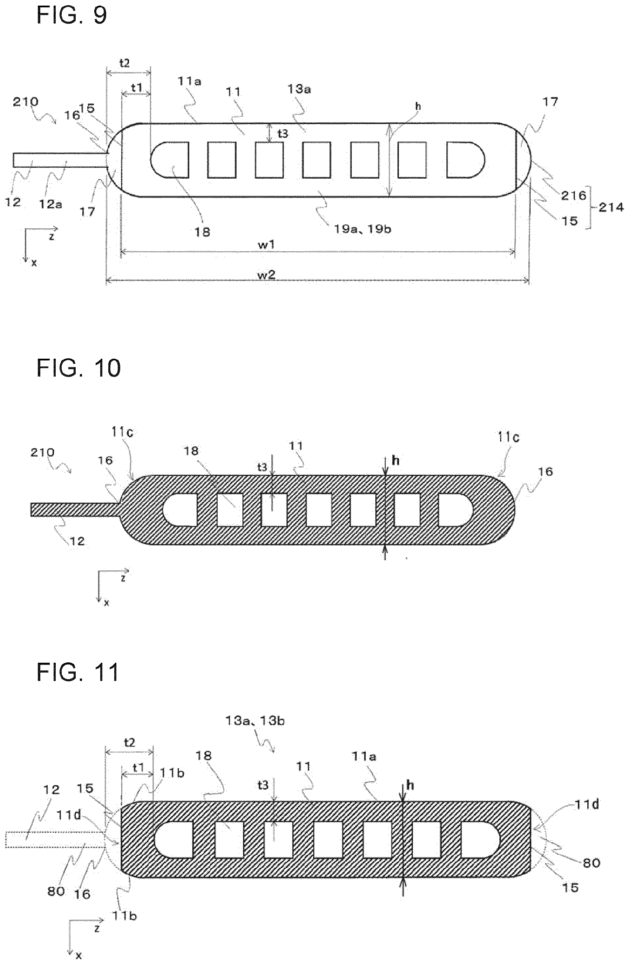

Fig. 9 is an enlarged view of the top or the bottom of a heat exchange member 210 according to Embodiment 2. Figs. 10 and 11 are sectional views of the heat exchange member 210 as illustrated in Fig. 9. Fig. 10 illustrates a section that corresponds to the section taken along line A-A in Fig. 3. Fig. 11 illustrates a section that corresponds to the section taken along line B-B in Fig. 3. The heat exchange member 210 includes the heat transfer tube 11 and the fin 12. The fin 12 extends only from one end edge 14, which is located at an end in the z direction, and no fin 12 is provided at the other end edge 14. The heat exchange member 210 is shaped such that the shape of the end edge 14 where the fin 12 is provided is the same as the shape of the end edge 14 of the heat exchange member 10 according to Embodiment 1. The shape of part of the heat exchange member 210 that is located at an end edge 214 in which no fin 12 is provided is an arc shape. However, as illustrated in Fig. 11, the shape of each of the end portions 13a and 13b of the heat exchange member 210 is the same as the shape of each of the end portions 13a and 13b of the heat exchange member 10 according to Embodiment 1.

The heat exchange member 210 according to Embodiment 2, as well as the heat exchange member 10 according to Embodiment 1, is made, by, for example, extrusion molding, of a roughly formed material whose sectional shape is unchanged in a direction perpendicular to the y direction. The corner portions 80 are cut out from the roughly formed material forming the heat exchange member 210, and no fin 12 is provided at the end edge 214 of the heat transfer tube 11. Thus, in each of the end portions 13a and 13b of the heat exchange member 210, the end-portion end face 15 is formed by cutting out part of the end of the heat transfer tube 11 at the end edge 214 in the z direction.

As described above, regarding the heat exchanger 200 according to Embodiment 2, in the heat exchange member 210, the fin 12 is provided only at the one end edge 14 in the z direction. Although the heat exchange member 210 has such a shape, the end portions 13a and 13b of the heat exchange member 210 can position the heat exchange member 210 for the headers 2, as in the heat exchange member 10 according to Embodiment 1.

### Embodiment 3

A heat exchanger 300 according to Embodiment 3 will be described. The heat exchanger 300 is different from the heat exchanger 100 according to Embodiment 1 in the shape of the heat exchange member 10. Regarding Embodiment 3, components that are the same in function and operation as those in Embodiment 1 will be denoted by the same reference signs, and their descriptions will thus be omitted.

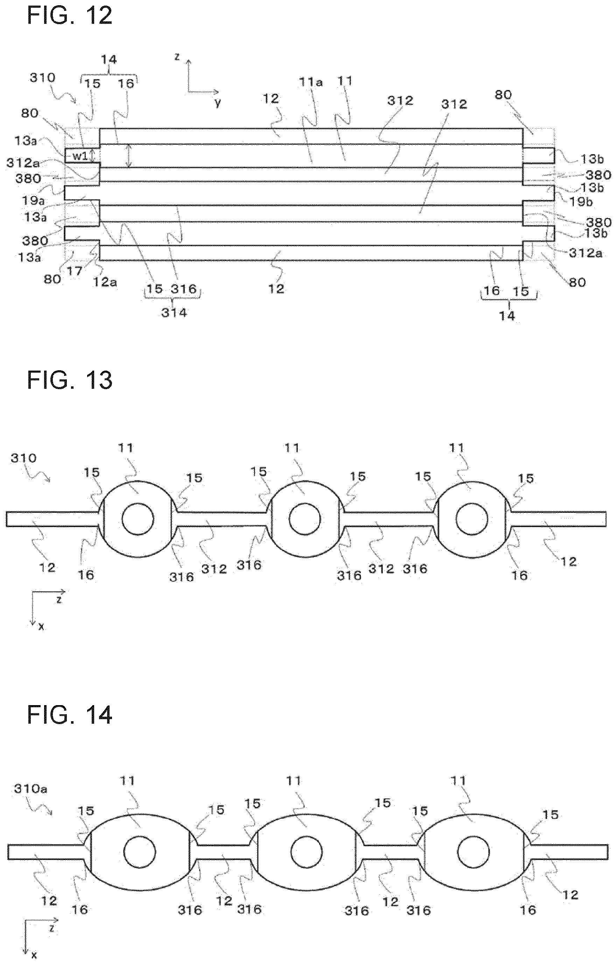

Fig. 12 is a side view of a heat exchange member 310 according to Embodiment 3. Fig. 13 is an enlarged view of the top or the bottom of the heat exchange member 310 according to Embodiment 3. The heat exchange member 310 includes heat transfer tubes 11 and the fins 12. Each of heat exchange members 310 includes a plurality of heat transfer tubes 311. The heat transfer tubes 311 are circular tubes and arranged in the z direction. Adjacent ones of the heat transfer tubes 311 are continuous with each other by the fins 312. At each of outermost ones of the heat transfer tubes 311 in the z direction, an associated fin 12 extends in the z direction from the fin setting portion 16, which is part of the end edge 14. The fins 312 by which the heat transfer tubes 311 are connected are provided such that fin setting portions 316, which are parts of edge portions 314 of adjacent ones of the heat transfer tubes 311, are continuous with each other by the respective fins 312, the above edge portions 314 being located to face each other.

In the end portions 13a and 13b of the heat exchange member 310, end-portion end faces 15 are formed at end edges 14 of the heat transfer tubes 311 that are located at respective ends thereof in the z direction. In addition, in the end portions 13a and 13b of the heat exchange member 310, the end-portion end faces 15 are formed at edge portions 314 of adjacent ones of the heat transfer tubes 311 that face each other in the second direction.

The heat exchange member 310, as well as the heat exchange member 10 according to Embodiment 1, is made, by, for example, extrusion molding, of a roughly formed material whose sectional shape is unchanged in the direction perpendicular to the y direction. The corner portions 80 and respective intermediate end portions 380 that are located between the heat transfer tubes 311 are cut out from the roughly formed material forming the heat exchange member 310. The corner portions 80 and the intermediate end portions 380 each include part of an associated fin 12 or 312 and part of an end of an associated heat transfer tube 311 in the z direction. The corner portions 80 and the intermediate end portions 380 are cut out from the roughly formed material forming the heat exchange member 310, whereby the end-portion end faces 15 are provided at the end edges 14 or 314, which are located at the respective sides of the heat transfer tubes 311 of the heat exchange member 310 in the z direction.

In the heat exchanger 300 according to Embodiment 3, a plurality of insertion holes 31a into which the end portions 13a and 13b of the heat exchange member 310 are inserted are formed in the headers 2. Also in Embodiment 3, the insertion holes 31a are shaped along the external shapes of the end portions 13a and 13b of the heat exchange member 310, and it is therefore possible to position the heat exchange member 310 for the headers 2.

As described above, the heat exchange member 310 according to Embodiment 3 is different from the heat exchange member 10 according to Embodiment 1 in the shape of the heat transfer tube. An external sectional shape of each of the end portions 13a and 13b of the heat exchange member 310 is formed by straight lines in the x direction and curved lines that extend to be convex toward the outside. Thus, the shape of each of the insertion holes 31a is simple. Therefore, it is possible to obtain advantages similar to those of the heat exchanger 100 according to Embodiment 1.

Fig. 14 is an enlarged view of the top or the bottom of a modification of the heat exchange member 310 according to Embodiment 3. Heat transfer tubes 311 that form a heat exchange member 310a in the modification may not be circular, and may be elliptical. In addition, the heat transfer tubes 311 may each have, for example, a rectangular or elliptical section.

The above descriptions concerning the embodiments are not limiting. For example, the embodiments may be combined in various manners. In short, the technical scope covers various modifications, applications, and uses that are implemented as occasion demands by a person with ordinary skill in the art. Reference Signs List

2: header, 10: heat exchange member, 11: heat transfer tube, 11a: side, 12: fin, 12a: fin end face, 13a: end portion, 13b: the other end portion, 14: end edge, 15: end-portion end face, 16: fin setting portion, 17: contact surface, 18: refrigerant passage, 19a: end face, 19b: end face, 30: first header, 31: first shell member, 31a: insertion hole, 32: second shell member, 33: refrigerant port, 34a: header upper surface, 35: straight portion, 36: curved portion, 40: second header, 50: refrigeration cycle apparatus, 80: corner portion, 100: heat exchanger, 101: compressor, 102: flow switching device, 103: indoor heat exchanger, 104: pressure reducing device, 105: outdoor heat exchanger, 106: outdoor unit, 107: indoor unit, 108: outdoor fan, 109: indoor fan, 110: refrigerant circuit, 111: extension pipe, 112: extension pipe, 200: heat exchanger, 210: heat exchange member, 214: end edge, 300: heat exchanger, 310: heat exchange member, 310a: heat exchange member, 311: heat transfer tube, 312: fin, 314: end edge, 316: fin setting portion, 380: intermediate end portion, RF: arrow, t1: first thickness, t2: second thickness, t3: third thickness, w1: width, w2: width

## Claims

1. A heat exchanger comprising:
a heat exchange member extending in a first direction; and
a header connected to an end portion of the heat exchange member that is located at an end of the heat exchange member in the first direction,
the heat exchange member including
at least one heat transfer tube extending in the first direction, and
a fin formed at part of an end edge of the at least one heat transfer tube, the end edge of the at least one heat transfer tube being located at an end of the at least one heat transfer tube in a second direction perpendicular to the first direction,
wherein the fin is provided at a fin setting portion that is at least part of a remaining portion of the heat exchange member that is other than the end portion of the heat exchange member, and
part of the at least one heat transfer tube that is located at the end portion of the heat exchange member has a smaller width in the second direction than a width of part of the at least one heat transfer tube in the second direction that is located at the fin setting portion.

2. The heat exchanger of claim 1, wherein a width of part of the at least one heat transfer tube in a third direction perpendicular to the first direction and the second direction that is located at the end portion of the heat exchange member is equal to a width of part of the at least one heat transfer tube in the third direction that is located at the fin setting portion.

3. The heat exchanger of claim 1 or 2, wherein
the at least one heat transfer tube includes a refrigerant passage therein, and
a first thickness of the at least one heat transfer tube is smaller than a second thickness of the at least one heat transfer tube, where the first thickness is a thickness of part of the at least one heat transfer tube at the end portion that is located from the refrigerant passage to the end edge of the at least one heat transfer tube, and the second thickness is a thickness of part of the at least one heat transfer tube at the fin setting portion that is located from the refrigerant passage to the end edge of the at least one heat transfer tube.

4. The heat exchanger of claim 3, wherein the second thickness is greater than a third thickness of the at least one heat transfer tube that is a thickness of part of the at least one heat transfer tube that is located from the refrigerant passage to a surface of the at least one heat transfer tube in the third direction perpendicular to the first direction and the second direction.

5. The heat exchanger of claim 4, wherein the first thickness is greater than or equal to the third thickness.

6. The heat exchanger of any one of claims 1 to 5, wherein
the header has an insertion hole into which the end portion of the heat exchange member is inserted, and
the insertion hole has a smaller width in the second direction than a width of part of the at least one heat transfer tube in the second direction that is located at the remaining portion of the heat exchange member that is other than the end portion of the heat exchange member.

7. The heat exchanger of any one of claims 1 to 6, wherein
the at least one heat transfer tube includes a refrigerant passage therein, and
a third thickness of the at least one heat transfer tube at the end portion is equal to the third thickness of the at least one heat transfer tube at the fin setting portion, where the third thickness of the at least one heat transfer tube is a thickness of part of the at least one heat transfer tube that is located from the refrigerant passage to a surface of the at least one heat transfer tube in the third direction perpendicular to the first direction and the second direction.

8. The heat exchanger of any one of claims 1 to 7, wherein
an external shape of an end edge portion including the end edge in the remaining portion of the heat exchange member that is other than the end portion of the heat exchange member is an arc shape in a section perpendicular to the first direction, and
an external shape of the end edge portion at the end portion is formed by combining a straight line and curved lines that extend to be convex toward an outside of the at least one heat transfer tube in a section perpendicular to the first direction,

9. The heat exchanger of any one of claims 1 to 8, wherein the at least one heat transfer tube is a flat tube.

10. The heat exchanger of claim 9, wherein the fin extends from the end edge, which is located at an associated one of both sides of the flat tube in the second direction.

11. The heat exchanger of claim 10, wherein
the at least one heat transfer tube is provided as a plurality of heat transfer tubes, and
at the end edge of each of adjacent ones of the plurality of heat transfer tubes in the second direction, an end face of the end portion of the heat exchange member is formed.

12. A heat exchange unit comprising the heat exchanger of any one of claims 1 to 11.

13. A refrigeration cycle apparatus comprising the heat exchange unit of claim 12.

14. A method for manufacturing a heat exchange member, comprising:
forming a roughly formed material that forms a heat exchange member including at least one heat transfer tube and a fin, the at least one heat transfer tube including a refrigerant passage that extends in a first direction in the at least one heat transfer tube, the fin extending from an end edge of the at least one heat transfer tube, the end edge of the at least one heat transfer tube being formed to extend in the first direction; and
cutting out, by press working, parts of the fin that are located at end portions of the heat exchange member, the end portions of the heat exchange member being located on respective sides of the heat exchange member in the first direction,
wherein a section of the roughly formed material that is taken along a direction perpendicular to the first direction is unchanged at any position in the first direction.

15. The method for manufacturing a heat exchange member of claim 14, wherein
in the forming the roughly formed material, the heat exchange member is formed such that a section of the heat exchange member is unchanged in the first direction, and
in the cutting the parts of the fin, part of the at least one heat transfer tube is cut out at the same time as the parts of the fin are cut out.
